Europäisches Patentamt

(19) European Patent Office

Office européen des brevets

(11) Publication number: **0 013 800**
**B1**

(12) **EUROPEAN PATENT SPECIFICATION**

(45) Date of publication of patent specification: **22.12.82**

(51) Int. Cl.³: **B 23 K 1/12,** B 21 D 53/08

(21) Application number: **79302251.8**

(22) Date of filing: **17.10.79**

(54) Improvements relating to heat exchangers.

(30) Priority: **17.10.78 GB 4088078**

(43) Date of publication of application:
**06.08.80 Bulletin 80/16**

(45) Publication of the grant of the patent:
**22.12.82 Bulletin 82/51**

(84) Designated Contracting States:
**DE FR GB IT**

(56) References cited:
DE - C - 91 740 4
GB - A - 10 761 40
US - A - 23 948 31
US - A - 27 942 43

(73) Proprietor: **BL CARS Limited**
**174 Marylebone Road**
**London NW1 5AA (GB)**

(72) Inventor: **Hitchen, Eric Morgan**
**102 The Avenue**
**Kennington, Oxford OX1 5RJ (GB)**

(74) Representative: **Muir, Peter Richard**
**BL Limited Patent Department Cowley Body Plant**
**Cowley, Oxford OX4 5NL (GB)**

Courier Press, Leamington Spa, England.

# Improvements Relating to Heat Exchangers

This invention relates to heat exchangers and in particular to heat exchangers of the packed construction type. Generally in such heat exchangers corrugated fins are sandwiched between flat-section tubes to define airways between the tubes.

Hitherto such heat exchangers have commonly been assembled in a combined assembly and brazing jig, and have included a pair of side casings and a pair of end casings which enclose the packed construction matrix. Under some circumstances it has been preferred to render the heat exchangers self-jigging so that whilst assembly may still take place in a jig the heat exchanger can be removed from the assembly jig without risk of disintegration and then brazed in a fixture.

United Kingdom Patent Specification 1076140 shows a method of producing a heat exchanger matrix assembly for subsequent brazing, in which a pack of fins and tubes are retained in an assembled state by a tubular member that passes through apertures in the tubes and has an abutment at each side of the assembly to prevent disassembly thereof. In such arrangement the tubular member serves only to retain the tubes and fins in an assembled state.

The present invention seeks to provide in one aspect a method of producing a heat exchanger with an improved structure, and is characterised in that the tubular member is a feed tube for fluid flowing to or from said tubes.

The feed tube may be inserted through said apertures after the matrix has been assembled, or alternatively the matrix may be assembled onto the feed tube, placing each of the tubes in turn over one end of the feed tube as the matrix is built up prior to the provision of that feed tube end with its abutment.

Generally two feed tubes are provided, one at each end of the heat exchanger, thereby rendering further securing means unnecessary prior to brazing.

Preferably the method includes the step of expanding an end portion of the feed tube after assembly of the heat exchanger matrix. The feed tube end portion may for example be expanded by swaging or by belling the tube end.

Preferably the method includes the step of locating a pair of side casings one on each side of the matrix and secured thereto prior to brazing by the feed tube which passes through apertures in the side casings.

Although under many circumstances the method according to the invention will enable the end casings of the prior art to be omitted for simplicity, cheapness and light weight, it is of course possible to include the step of providing a pair of end casings for greater rigidity or particular mounting requirements.

The invention extends to a heat exchanger matrix assembly for subsequent brazing, including a pack of fins and tubes retained in an assembled state by a tubular member that passes through apertures in the tubes and has an abutment at each side of the assembly to prevent disassembly thereof, characterised in that the said tubular member is a feed tube for fluid flowing to or from said tubes.

Figure 1 shows a heat exchanger matrix assembly of packed construction prior to brazing; and

Figure 2 is a cross sectional side view of the heat exchanger of Figure 1 taken along the line II—III.

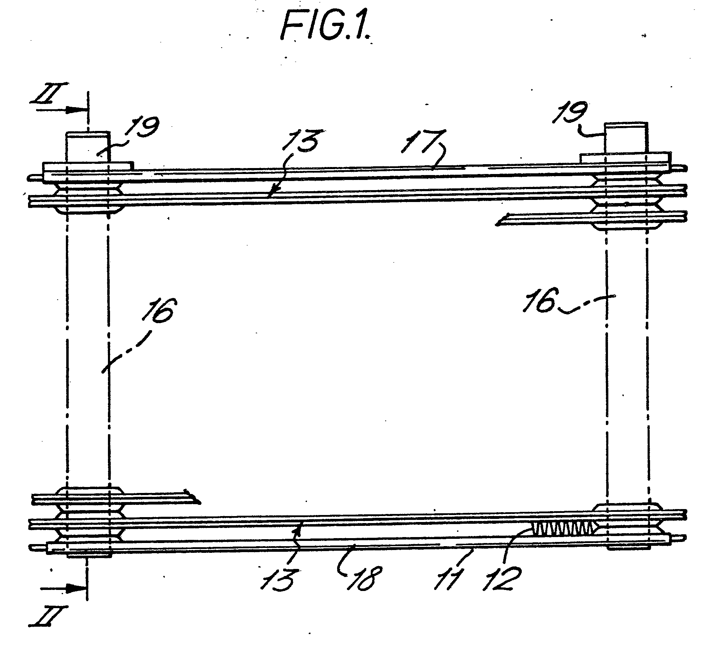

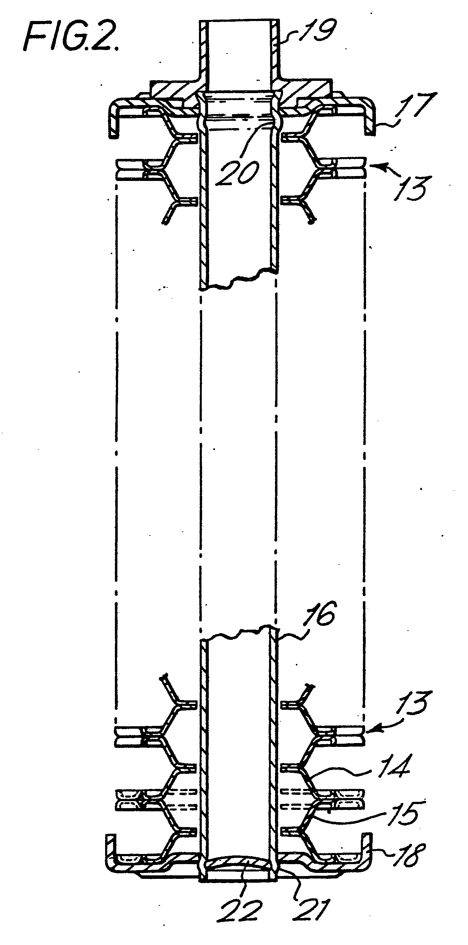

In Figure 1 there is shown a matrix assembly for an aluminium oil-cooler 11 for a motor vehicle. The oil cooler is of packed construction and has a matrix comprising a pack of fins 12 and tubes 13 arranged in alternate layers. As shown in Figure 2, each of the tubes 13 is made up of an upper pressing 14 and a lower pressing 15 which are to be brazed together.

At both ends of the tubes 13 there are apertures disposed in header portions of the tubes, through which pass feed tubes 16. The feed tubes are themselves provided with apertures (not shown) which allow oil to flow from one feed tube to the other by way of tubes 13.

At the sides of the matrix are disposed side casings 17 and 18 respectively. Side casing 17 is secured to each of the feed tubes between an inlet and outlet fitting 19 swaged to the end portion of the feed tube, and an annular swaged portion 20. Side casing 18 is held in place between the matrix and an annular swaged portion 21 on the feed tube. A domed capping member 22 is fitted in the hollow of swaged portion 21 to close the end of each feed tube.

The arrangement shown may be assembled in different ways. A first method of assembly is to assemble first the fins 12 and tubes 13 in an assembly jig along with the side casings. The feed tubes are then slid through the apertures in the tubes 13 and the side casings and, with the matrix assembly subjected to a compressive loading, the various swaging operations are performed. A second method involves assembling the fins, tubes and side casings onto the feed tubes in an assembly jig, the swaging operations then being performed as above.

With the arrangement thus assembled it can be removed from the assembly jig without risk of disassembly and may be passed on for brazing. The need to provide a combined assembly and brazing jig is thus avoided. The assembly is then brazed with the matrix again subjected to a compressive loading, to effect a closing up of the elements as the brazing metal on their surface melts.

The closing up of the elements results in side casing 18 moving along the feed tubes from swaged portions 21 until the matrix is fully closed up, when the casing becomes brazed in position.

It will be understood that although in the present embodiment swaging has been used to provide the necessary abutments on the feed tubes to prevent disassembly of the matrix, other forms of abutment could be used. For example other methods could be used for expanding the end portion 21; indeed, the abutment could even take the form of a cap over the lower end of the feed tube which would also serve the purpose of closing the end of the tube.

Again the inlet and outlet fitting 19 is by no means essential — some form of abutment only being necessary. It will be clear that the abutment at one end of each feed tube could be provided prior to assembly of the heat exchanger.

## Claims

1. A method of producing a heat exchanger matrix assembly for subsequent brazing, in which a pack of fins (12) and tubes (13) are retained in an assembled state by a tubular member that passes through apertures in the tubes (13) and has an abutment (21) at each side of the assembly to prevent disassembly thereof, characterised in that the said tubular member is a feed tube (16) for fluid flowing to or from said tubes (13).

2. A method as claimed in claim 1, characterised in that at least one of the said abutments (21) is produced by radially expanding the feed tube (16).

3. A method as claimed in claim 2, characterised in that the feed tube (16) is expanded by swaging.

4. A method as claimed in claim 1, 2 or 3, characterised in that at least one of said abutments (19) comprises an element attached to the feed tube (16).

5. A method as claimed in any preceding claim, characterised in that the matrix is compressed in a direction parallel to the feed tube (16) prior to providing at least one of said abutments (19, 21).

6. A method as claimed in any preceding claim, characterised in that one of the said abutments (19, 21) is provided prior to assembly of the feed tube (16) with the pack of fins (12) and tubes (13).

7. A method as claimed in any preceding claim, characterised in that, after assembly, the matrix (12, 13) is subjected to compressive loading and brazed.

8. A method as claimed in any preceding claim, characterised in that the feed tube (16) is inserted through the apertures after the matrix (12, 13) has been assembled.

9. A method as claimed in any one of the claims 1 to 7, characterised in that the matrix (12, 13) is assembled onto the feed tube (16).

10. A method as claimed in any preceding claim, characterised by the step of locating a pair of side casings (17) one on each side of the matrix (12, 13) and securing the side casings in place by means of said abutment prior to brazing.

11. A heat exchanger characterised by having being constructed in accordance with the method of any one of claims 1 to 10.

12. A heat exchanger matrix assembly for subsequent brazing, including a pack of fins and tubes retained in an assembled state by a tubular member that passes through apertures in the tubes and has an abutment at each side of the assembly to prevent disassembly thereof, characterised in that the said tubular member is a feed tube (16) for fluid flowing to or from said tubes (13).

## Patentansprüche

1. Verfahren zur Erzeugung eines Wärmeaustauschermatrixaufbaus zum nachfolgenden Hartverlöten, wobei ein Bündel Rippen (12) und Röhren (13) im zusammengebauten Zustand durch ein röhrenförmiges Glied festgehalten wird, welches Oeffnungen in den Röhren (13) durchsetzt und auf beiden Seiten des Aufbaus eine Schulter (21) aufweist, um dessen Auseinanderfallen zu verhindern, dadurch gekennzeichnet, dass dieses röhrenförmige Glied ein Zufuhrrohr (16) für in oder aus jenen Röhren (13) strömende Flüssigkeit ist.

2. Verfahren nach Anspruch 1, dadurch gekennzeichnet, dass mindestens eine dieser Schultern (21) durch radiales Ausweiten des Zufuhrrohrs (16) erzeugt wird.

3. Verfahren nach Anspruch 2, dadurch gekennzeichnet, dass das Zufuhrrohr (16) durch Stauchen ausgeweitet wird.

4. Verfahren nach Anspruch 1, 2 oder 3, dadurch gekennzeichnet, dass mindestens eine dieser Schultern (19) ein am Zufuhrrohr (16) befestigtes Element aufweist.

5. Verfahren nach einem der vorhergehenden Ansprüche, dadurch gekennzeichnet, dass die Matrix vor der Schaffung mindestens einer jener Schultern (19, 21) in einer dem Zufuhrrohr (16) parallelen Richtung zusammengedrückt wird.

6. Verfahren nach einem der vorhergehenden Ansprüche, dadurch gekennzeichnet, dass eine jener Schultern (19, 21) vor dem Zusammenbau des Zufuhrrohrs (16) mit dem Bündel Rippen (12) und Röhren (13) hergestellt wird.

7. Verfahren nach einem der vorhergehenden Ansprüche, dadurch gekennzeichnet, dass die Matrix (12, 13) nach dem Zusammenbau einer Drucklast unterworfen und hartverlötet wird.

8. Verfahren nach einem der vorhergehenden Ansprüche, dadurch gekennzeichnet, dass das Zufuhrrohr (16) nach dem Zusammenbau der Matrix (12, 13) durch die Oeffnungen eingesetzt wird.

9. Verfahren nach einem der Ansprüche 1 bis 7, dadurch gekennzeichnet, dass die Matrix (12, 13) auf dem Zufuhrrohr (16) zusammengebaut wird.

10. Verfahren nach einem der vorhergehenden Ansprüche, gekennzeichnet durch den Vorgang, je ein Paar Seitengehäuse (17) auf beiden Seiten der Matrix (12, 13) anzuordnen und die Seitengehäuse vor dem Hartverlöten mittels jener Schultern festzulegen.

11. Wärmeaustauscher, dadurch gekennzeichnet, dass er gemäss dem Verfahren nach einem der Ansprüche 1 bis 10 konstruiert wurde.

12. Wärmeaustauschermatrixaufbau zum nachfolgenden Hartverlöten, umfassend ein Bündel Rippen und Röhren, das im zusammengebauten Zustand durch ein röhrenförmiges Glied festgehalten wird, welches Oeffnungen in den Röhren durchsetzt und auf beiden Seiten des Aufbaus eine Schulter aufweist, um dessen Auseinanderfallen zu verhindern, dadurch gekennzeichnet, dass dieses röhrenförmiges Glied ein Zufuhrrohr (16) für in oder aus jenen Röhren (13) strömende Flüssigkeit ist.

**Revendications**

1. Procédé de production d'un corps d'échangeur de chaleur assemblé en vue du brasage ultérieur, suivant lequel un paquet d'ailettes (12) et de tubes (13) est maintenu à l'état assemblé par un élément tubulaire qui passe à travers des ouvertures dans les tubes (13) et présente un appui (21) de chaque côté du montage assemblé pour en éviter le démontage, caractérisé en ce que l'élément tubulaire est un tube d'alimentation (16) destiné à un fluide s'écoulant vers ces tubes (13) ou à partir de ceux-ci.

2. Procédé suivant la revendication 1, caractérisé en ce qu'au moins un de ces appuis (21) est obtenu par dilatation radiale du tube d'alimentation (16).

3. Procédé suivant la revendication 2, caractérisé en ce que le tube d'alimentation (16) est dilaté par estampage.

4. Procédé suivant la revendication 1, 2 ou 3, caractérisé en ce qu'au moins un de ces appuis (19) comprend un élément fixé au tube d'alimentation (16).

5. Procédé suivant l'une quelconque des revendications précédentes, caractérisé en ce que le corps est comprimé dans une direction parallèle au tube d'alimentation (16) avant qu'il soit pourvu d'au moins un de ces appuis (19, 21).

6. Procédé suivant l'une quelconque des revendications précédentes, caractérisé en ce que l'un de ces appuis (19, 21) est prévu avant l'assemblage du tube d'alimentation (16) et du paquet d'ailettes (12) et de tubes (13).

7. Procédé suivant l'une quelconque des revendications précédentes, caractérisé en ce qu'après l'assemblage, le corps (12, 13) est soumis à une charge en compression et au brasage.

8. Procédé suivant l'une quelconque des revendications précédentes, caractérisé en ce que le tube d'alimentation (16) est inséré à travers les ouvertures après assemblage du corps (12, 13).

9. Procédé suivant l'une quelconque des revendications 1 à 7, caractérisé en ce que le corps (12, 13) est assemblé sur le tube d'alimentation (16).

10. Procédé suivant l'une quelconque des revendications précédentes, caractérisé en ce qu'il comprend l'opération de mise en place de deux boîtiers latéraux (17) prévus à raison d'un de chaque côté du corps (12, 13) et la fixation des boîtiers latéraux en place au moyen des appuis avant le brasage.

11. Echangeur de chaleur, caractérisé en ce qu'il est construit par le procédé suivant l'une quelconque des revendications 1 à 10.

12. Corps d'échangeur de chaleur assemblé en vue du brasage ultérieur comprenant un paquet d'ailettes et de tubes maintenu à l'état assemblé par un élément tubulaire qui passe à travers des ouvertures dans les tubes et présente un appui de chaque côté de l'assemblage pour en empêcher le démontage, caractérisé en ce que l'élément tubulaire est un tube d'alimentation (16) destiné à un fluide s'écoulant vers ces tubes (13) ou à partir de ceux-ci.

# FIG.1.

1

FIG.2.